# EUROPEAN PATENT APPLICATION

(11) **EP 4 693 811 A1**
(43) Date of publication of application: **11.02.2026**
(21) Application number: 24778767.4
(22) Date of filing: 14.02.2024
(51) Int. Cl.: H02J 7/02, H01M 10/44, H01M 10/48, H02J 7/04

(54) **BATTERY PARALLEL CONNECTION CHARGING METHOD AND CHARGER FOR BATTERIES CONNECTED IN PARALLEL**

(30) Priority: 30.03.2023 JP 2023055974
(71) Applicant: Panasonic Energy Co., Ltd., Moriguchi-shi, Osaka 570-8511 (JP)
(72) Inventor: MAEGAWA Kazuya, kadoma-shi, Osaka 571-0057 (JP); NONAKA, Takafumi, kadoma-shi, Osaka 571-0057 (JP); HONJO, Ryuji, kadoma-shi, Osaka 571-0057 (JP); TANIGUCHI, Keitaro, kadoma-shi, Osaka 571-0057 (JP)
(74) Representative: Novagraaf International SA
(86) International application number: PCT/JP2024/004913
(87) International publication number: WO 2024/202622

(57) **Abstract**

The method for charging parallel connected batteries and parallel connected battery charger safely and rapidly charge a plurality of batteries connected in parallel. After initial charging with battery charger output current set to a minimum charging current (Imin), detected charging current is compared with the maximum allowable current (Imax) for each battery. Without detected charging current (Id) exceeding the maximum allowable current (Imax) in any battery, battery charger output current is gradually increased to make charging current in the battery with the smallest current difference (IΔ) between detected charging current (Id) and the maximum allowable current (Imax), namely the battery with charging current closest to Imax, equal to the maximum charging current (Ic) for safe charging, and thereby charge each battery simultaneously

## Description

### TECHNICAL FIELD

The present invention relates to a method for charging a plurality of batteries connected in parallel and to a battery charger employing that method.

### BACKGROUND ART

When a plurality of batteries with the same rated voltage are connected in parallel and charged, charging current is not uniform in all the batteries. This is because the open circuit voltage (OCV) and internal resistance of each battery differs due to the charge/discharge environment and storage conditions. When batteries with different open circuit voltage (OCV) are connected in parallel and charged, batteries with high open circuit voltage OCV have low charging current, and batteries with low open circuit voltage OCV have high charging current. Charging current also varies depending on battery internal resistance, and consequently batteries connected in parallel that have different internal resistance will have different charging currents. Batteries with low internal resistance have high charging current, and batteries with high internal resistance have low charging current. Batteries are initially specified with a maximum allowable current (Imax), and if charging current exceeds Imax, protection circuitry is actuated to cut off the charging current. If batteries without protection circuitry are charged with charging current that exceeds Imax , electrical characteristic degradation as well as safety issues are a concern.

A plurality of batteries can be charged under favorable conditions without exceeding the maximum allowable current (Imax) by sequentially switching between batteries (e.g. Patent Literature 1 and 2).

### CITATION LIST

### PATENT LITERATURE

Patent Literature 1:Japanese Laid-Open Patent Publication JP 2007-166723
Patent Literature 2:Japanese Laid-Open Patent Publication JP H9-215218

### SUMMARY OF THE INVENTION

### TECHNICAL PROBLEM

While sequential charging of a plurality of batteries can charge each battery under ideal conditions, this method has the drawback that charging time increases significantly when the number of batteries increases. Particularly, for charging rechargeable batteries, such as lithium-ion batteries, while keeping output voltage below a threshold voltage, initial constant current charging is followed by constant voltage charging after output voltage reaches the maximum voltage. Since charging current gradually decreases during constant voltage charging, the amount of charge per unit time decreases and the time required for full charge is prolonged. Consequently, sequential switching between batteries to charge them one by one has the drawback that the total time required to charge all the batteries is extremely long.

The present invention was developed to resolve the drawback described above. Accordingly, one object of the present invention is to provide a method for charging parallel connected batteries and a parallel connected battery charger that can efficiently charge a plurality of batteries in a short time while charging each battery with appropriate charging current.

### SOLUTION TO THE PROBLEM

An embodiment of the method for charging parallel connected batteries for the present invention is a method that controls battery charger output current to charge a plurality of batteries connected in parallel. After initially charging all the batteries with battery charger output current set to make battery charging current equal to a minimum charging current (Imin), charging current in each battery is detected. The detected charging current (Id) is compared with the maximum allowable current (Imax) for the battery being measured. Battery charger output current is gradually increased until the charging current of the battery with the smallest current difference (IΔ) between detected charging current (Id) and the maximum allowable current (Imax) , namely the battery with charging current most closely approaching the maximum allowable current (Imax), reaches a maximum charging current (Ic), which can include the maximum allowable current (Imax). This simultaneously charges the plurality of batteries without exceeding the maximum allowable current (Imax) of any battery.

An embodiment of the parallel connected battery charger for the present invention is a battery charger for charging a plurality of parallel connected batteries and is provided with current detection circuits that detect the charging current of each battery connected to the battery charger; comparators that compare the detected charging current (Id) of each battery with a reference current corresponding to the maximum allowable charging current (Imax) for that battery, and the comparator for each battery outputs a current difference signal for that battery; a signal selecting circuit that selects the smallest current difference signal output from the respective comparators; a feedback circuit that controls battery charger output current based on the smallest current difference signal selected by the signal selecting circuit; and an output current control circuit that controls battery charger output current based on the control signal input from the feedback circuit. Accordingly, the output current control circuit is controlled by the minimum current difference signal from the feedback circuit to adjust output current to make charging current in the battery with charging current closest to Imax equal to the maximum charging current (Ic), and thereby charge the parallel connected batteries.

### ADVANTAGEOUS EFFECTS OF THE INVENTION

The method for charging parallel connected batteries and parallel connected battery charger described above have the characteristic that a plurality of batteries can be efficiently charged in a short time while charging each battery with optimal charging current.

### BRIEF DESCRIPTION OF THE DRAWINGS

FIG. 1 is a graph showing charging current characteristics in each battery when battery charger output current is increased in steps.
FIG. 2 is a graph showing charging current characteristics in each battery when battery charger output current is increased in a continuous manner.
FIG. 3 is a lock diagram of a battery charger for charging a plurality of batteries for an embodiment of the present invention.
FIG. 4 is a graph showing increasing detected charging current characteristics when battery charger output current is increased.
FIG. 5 is a graph showing increasing detected charging current characteristics when battery charger output current is increased.
FIG. 6 is a graph showing increasing detected charging current characteristics when battery charger output current is increased.
FIG. 7 is a graph showing current characteristics when charging current in the battery with charging current closest to Imax is increased and decreased to attain the maximum allowable current (Imax).
FIG. 8 is a block diagram of a battery charger for an embodiment of the present invention.

### DESCRIPTION OF THE EMBODIMENTS

The following describes the present invention in detail with reference to the drawings. In the following descriptions, terms indicating specific direction or position (such as "upper," "lower," and similar terms) are used as necessary to facilitate understanding of the invention with reference to the drawings. However, use of those terms is not intended to limit the technical scope of the invention based on the meaning of those terms. In addition, components or materials appearing in multiple figures with the same reference numbers indicate the same or equivalent components or materials. Embodiments described below are examples of the technical concept of the present invention and are not intended to limit the scope of the invention to those examples. Unless specifically stated otherwise, dimensions, materials, shapes, relative disposition, and other aspects of the components described below are merely illustrative and are not intended to limit the scope of the invention. Further, what is described in one embodiment or example may also apply to other embodiments or examples. Note that the size, positional relationships, and other characteristics of components shown in the drawings may be exaggerated for the purpose of clear explanation.

One embodiment of the method for charging parallel connected batteries for the present invention is a method that controls battery charger output current to charge a plurality of batteries connected in parallel. After initially charging all the batteries with battery charger output current set to make battery charging current equal to a minimum charging current (Imin), charging current in each battery is detected. The detected charging current (Id) is compared with the maximum allowable current (Imax) for the battery being measured. Battery charger output current is gradually increased until charging current in the battery with the smallest current difference (IΔ) between detected charging current (Id) and the maximum allowable current (Imax), namely the battery with charging current closest to Imax, reaches a maximum charging current (Ic), which can include the maximum allowable current (Imax). This simultaneously charges the plurality of batteries without exceeding the maximum allowable current (Imax) of any battery.

Since the method for charging parallel connected batteries described above detects the charging current in each battery and controls battery charger output current to keep the detected charging current (Id) from exceeding the maximum allowable current (Imax) of each battery, the batteries can be safely charged. Further, since the method compares the detected charging current (Id) of each battery with the maximum allowable current (Imax) of the battery being measured, and gradually increases battery charger output current until the charging current of the battery with the smallest current difference (IΔ) between detected charging current (Id) and maximum allowable current (Imax) (i.e. the battery with charging current closest to Imax) reaches the maximum charging current (Ic), which can include the maximum allowable current (Imax), it has the characteristic that a plurality of batteries can be safely and efficiently charged in a short time without degrading battery electrical characteristics.

Another embodiment of the method for charging parallel connected batteries for the present invention can set battery charger output current less than or equal to the lowest maximum allowable current (Imax) of all the plurality of batteries, and initiate charging with battery charging current set to that minimum charging current (Imin).

By commencing charging with battery charger output current set less than or equal to the smallest maximum allowable current (Imax) of all the plurality of batteries, namely set to an initial minimum charging current (Imin), the charging method prevents initial charging current from exceeding the smallest maximum allowable current (Imax) and has the characteristic that battery charging can be safely initiated.

Another embodiment of the method for charging parallel connected batteries for the present invention is provided with an initial charging step where charging is initiated with battery charger output current set to make the charging current in each battery equal to the minimum charging current (Imin), a current detection step after the initial charging step where charging current is detected in each battery, and an output control step where the current difference (IΔ) between charging current (Id) measured in the current detection step and the maximum allowable current (Imax) of the battery being measured is determined and battery charger output current is increased or decreased based on that current difference (IΔ). The current detection step and output control step are repeated with given periodicity and battery charger output current is increased until the charging current in the battery with charging current closest to Imax reaches the maximum charging current (Ic) to charge the plurality of parallel connected batteries.

Since this charging method repeatedly executes the current detection step and the output control step with given periodicity to set battery charger output current to an optimal value, it has the characteristic that each battery can be efficiently charged in a short time while continuously maintaining safe and favorable charging conditions for the plurality of batteries.

Another embodiment of the method for charging parallel connected batteries for the present invention can increase battery charger output current in a stepwise manner by adding a current increment (I+) to the battery charger output current in the output control step.

This charging method has the characteristic that battery charger output current increased in steps rapidly increases charging current in the battery with charging current closest to Imax to the maximum charging current (Ic) to efficiently charge all the batteries in a short time.

In another embodiment of the method for charging parallel connected batteries for the present invention, the current increment (I+) added to the battery charger output current can be determined from the current difference (IΔ) between the detected charging current (Id) and the maximum allowable current (Imax) of the battery with charging current closest to Imax.

This charging method has the characteristic that battery charger output current can be quickly increased the to the maximum charging current (Ic) for more efficient charging in a shorter period of time while reducing the probability that detected charging current (Id) of the battery with charging current closest to Imax will exceed the maximum allowable current (Imax).

In another embodiment of the method for charging parallel connected batteries for the present invention, the current increment (I+) can be a value that gradually decreases after the initial charging step.

In this charging method, when the difference (IΔ) between the charging current and the maximum allowable current (Imax) is large, the current increment (I+) is set high to rapidly increase battery charger output current and make battery charging current approach the maximum allowable current (Imax) to reduce charging time. When the current difference (IΔ) becomes small, the current increment (I+) is decreased to limit the increase in battery charger output current and lower the probability that the battery charging current will exceed the maximum allowable current (Imax). This has the characteristic that battery charger charging current can accurately approach the maximum allowable current (Imax) to safely charge the batteries.

In another embodiment of the method for charging parallel connected batteries for the present invention, the current increment (I+) is preset. For example, the current increment (I+) can be a fixed current, vary or decrease with a preset fixed ratio, rate of change, or amount of change. This has the characteristic the batteries can be charged with output current that approaches the maximum allowable current (Imax) according to a simple control method.

In another embodiment of the method for charging parallel connected batteries for the present invention, when the detected charging current (Id) exceeds the maximum allowable current (Imax), battery charger output current can be reduced to make detected charging current (Id) lower than the maximum allowable current (Imax) by looping back from the output control step to the initial charging step.

This charging method has the characteristic that the charging current in the battery with charging current closest to Imax can be reduced below the maximum allowable current (Imax) to prevent adverse effects due to overcharging by extremely simple processing, and battery charging current can subsequently be increased to raise charging current in the battery with charging current closest to Imax to the maximum charging current (Ic).

Another embodiment of the method for charging parallel connected batteries for the present invention can reduce battery charger output current in the output control step by subtracting a current decrement (I-) from the battery charger output current.

This method for charging parallel connected batteries has the characteristic that battery charger output current can be reduced in a stepwise manner to rapidly decrease charging current in the battery with charging current closest to Imax and safely charge all the batteries.

Another embodiment of the method for charging parallel connected batteries for the present invention can set the current decrement (I-) according to the amount of over-current (Iover) by which the detected charging current (Id) exceeds the maximum allowable current (Imax).

This method for charging parallel connected batteries has the characteristic that battery charger output current can be quickly reduced for safer battery charging by setting the current decrement (I-) based on the amount of over-current (Iover) by which the detected charging current (Id) exceeds the maximum allowable current (Imax).

Another embodiment of the method for charging parallel connected batteries for the present invention can increase output current by adding a current increment (I+) and decrease output current by subtracting a current decrement (I-), and the current increment (I+) and the current decrement (I-) can be set to the same value.

Since the amount of increase and decrease in battery charger output current is equal, charging current can be reliably restored to a value below the maximum allowable current (Imax) even when that maximum allowable current (Imax) is temporarily exceeded. Accordingly, this method has the characteristic that output current can be promptly restored within a safe range.

In another embodiment of the method for charging parallel connected batteries for the present invention, when the detected charging current (Id) in each battery is compared with the maximum allowable current (Imax) for the battery being measured and when the detected charging current (Id) of the battery with charging current closest to Imax is less than the maximum allowable current (Imax) by a current difference (IΔ) that is greater than or equal to a preset threshold value, battery charger output current can be increased in the output control step to charge the plurality of parallel connected batteries.

This charging method can increase battery charger output current by simple processing to promptly raise the charging current in the battery with charging current closest to Imax to the maximum charging current (Ic) and efficiently charge the batteries. At the same time, since the method ensures that the detected charging current (Id) of the battery with charging current closest to Imax is less than the maximum allowable current (Imax) and the current difference (IΔ) is greater than or equal to the preset threshold prior to increasing output current, it has the characteristic that the battery charger can increase output current while preventing charging current from exceeding the maximum allowable current (Imax) to ensure a high degree of safety.

Another embodiment of the method for charging parallel connected batteries for the present invention compares the detected charging current (Id) of each battery with the maximum allowable current (Imax) for the battery being measured and if the detected charging current (Id) of any battery exceeds the maximum allowable current (Imax), battery charger output current can be decreased in the output control step to charge the plurality of parallel connected batteries.

This method for charging parallel connected batteries has the characteristic that as a result of increasing battery charger output current, even if the charging current of any battery exceeds the maximum allowable current (Imax), battery charger output current can be reduced to safely charge the batteries.

In another embodiment of the method for charging parallel connected batteries for the present invention, when the detected charging current (Id) of the battery with charging current closest to Imax is equal to the maximum charging current (Ic), the plurality of parallel connected batteries can be charged without increasing or decreasing battery charger output current in the output control step.

This method for charging parallel connected batteries has the characteristic that since the detected charging current (Id) of the battery with charging current closest to Imax is at the maximum charging current (Ic) and conditions for safe and efficient charging of that battery are satisfied, all the batteries can be safely and efficiently charged by maintaining constant battery charger output current.

Another embodiment of the method for charging parallel connected batteries for the present invention can charge a plurality of parallel connected batteries with different charge capacities (Ah) by controlling battery charger output current to keep the charging current of each battery from exceeding the maximum allowable current (Imax) and charge the plurality of batteries with different charge capacities (Ah) safely and efficiently in a short time.

Another embodiment of the parallel connected battery charger for the present invention is a battery charger for charging a plurality of parallel connected batteries and is provided with current detection circuits that detect the charging current of each battery connected to the battery charger; comparators that compare the detected charging current (Id) of each battery with a reference current corresponding to the maximum allowable charging current (Imax) for the battery being measured, and the comparator for each battery outputs a current difference signal for that battery; a signal selecting circuit that selects the smallest current difference signal output from the respective comparators; a feedback circuit that controls battery charger output current based on the smallest current difference signal selected by the signal selecting circuit; and an output current control circuit that controls battery charger output current based on the control signal input from the feedback circuit. Accordingly, the output current control circuit is controlled by the minimum current difference signal from the feedback circuit to adjust output current to make charging current in the battery with charging current closest to Imax equal to the maximum charging current (Ic), and thereby charge all the parallel connected batteries.

In the battery charger described above, charging current is detected in each of the parallel connected batteries, and the detected charging current (Id) is compared via a comparator with a reference current that corresponds to the maximum allowable current (Imax) for the battery being measured to determine a current difference signal for each battery. Since the smallest current difference signal is selected and fed back to the battery charger, battery charger output current can be controlled by the minimum difference signal to set the charging current in the battery with detected current closest to the maximum allowable current to the maximum charging current (Ic). Namely, since the minimum difference signal is the current difference (IΔ) between the detected charging current (Id) and the maximum allowable current (Imax) for the battery with charging current closest to Imax, charging current in the battery with charging current closest to Imax can be controlled to the maximum charging current (Ic) by controlling battery charger output current using the minimum difference signal. Accordingly, this battery charger has the characteristic that it can safely and efficiently charge a plurality of batteries in a short time while keeping charging current in each battery below the maximum allowable current (Imax) to avoid electrical characteristic degradation.

### (Embodiment 1)

When a plurality of batteries with the same rated voltage are connected in parallel and charged, charging current in each battery is not equal. This is because different internal resistance and open circuit voltage (OCV) in each battery cause charging current differences. Each battery has a predetermined maximum charging current, which is the maximum allowable current (Imax). Charging with current that exceeds the maximum allowable current (Imax) can cause electrical characteristic degradation and compromise safety.

In the method for charging parallel connected batteries and battery charger for the embodiments described below, a plurality of parallel connected batteries can be safely and efficiently charged in a short time. While the batteries connected to the battery charger have the same rated voltage, they do not necessarily have the same charge capacity (Ah), and those different charge capacity (Ah) batteries can be connected in parallel and charged. While charging current differences among the batteries increases when a plurality of batteries with different charge capacities (Ah) are charged in parallel, charging and discharging in the following embodiments detects the charging current of each battery and ensures that charging current does not exceed the maximum allowable current (Imax). Consequently, batteries with different charge capacities (Ah) can be safely charged.

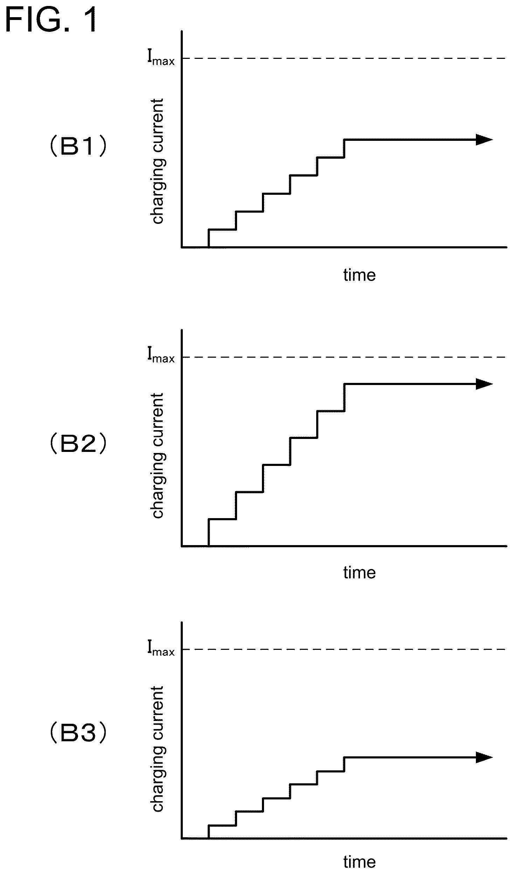

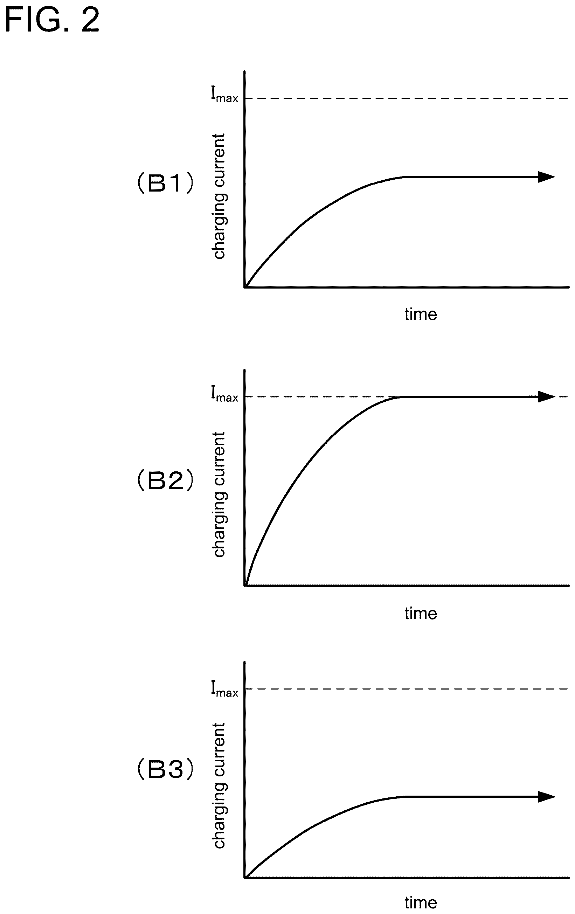

FIG. 1 shows the charging current in each of three batteries B1, B2, and B3 with the same rated voltage, which are connected in parallel to a battery charger and charged. FIG. 1 shows an example where charging current increases stepwise and FIG. 2 shows an example where charging current in the batteries B1, B2, and B3 increases continuously. These are specific examples where current in the battery with charging current closest to Imax (B2) is increased to the maximum charging current (Ic).

In this patent application, the term "battery with charging current closest to Imax" refers to the battery with minimum current difference (IΔ) between the detected charging current (Id) and the maximum allowable current (Imax). The term "maximum charging current (Ic)" refers to charging current that is equal to or less than the maximum allowable current (Imax). For example, maximum charging current (Ic) can be equal to the maximum allowable current (Imax), or can be a current within a specific range below the maximum allowable current (Imax) where the battery with charging current closest to Imax can be safely and efficiently charged.

The maximum charging current (Ic) can preferably be set equal to the maximum allowable current (Imax), or within the range of the maximum allowable current (Imax) - 15%, and more preferably the maximum charging current (Ic) can be set within the range of the maximum allowable current (Imax) - 10%.

The charging current is the current that charges each of the parallel connected batteries, and the detected charging current (Id) is the value of the current detected in each battery. The maximum allowable current (Imax) is the current value above which protection circuitry is actuated to cut off the charging current, and in batteries without a protection circuitry, charging with charging current exceeding the maximum allowable current (Imax) can cause electrical characteristic degradation as well as safety issues.

In the charging method for charging the plurality of batteries B1, B2, and B3 shown in the current characteristics of FIG. 1, battery charger output current is initially set to a minimum charging current (Imin) to begin charging all the batteries (initial charging step). Subsequently, charging current in each battery is detected (current detection step), and the detected charging current (Id) is compared with the maximum allowable current (Imax) for the battery being measured. While keeping the detected charging current (Id) from exceeding the maximum allowable current (Imax) in any battery, battery charger output current is controlled to gradually increase current in the battery with charging current closest to Imax, which is the battery with the smallest current difference (IΔ) between the detected charging current (Id) and the maximum allowable current (Imax), and make that charging current equal to the maximum charging current (Ic) (output control step).

In the charging method for charging a plurality of batteries B1, B2, and B3 shown in the current characteristics of FIG. 1, the smallest maximum allowable current (Imax) of the batteries B1, B2, and B3 connected in parallel to the battery charger is sought. Battery charger output current is set less than or equal to that smallest maximum allowable current (Imax) in the batteries B1, B2, and B3, and charging of all the batteries is commenced with that minimum charging current (Imin) (initial charging step). Subsequently, charging current is detected in each battery (current detection step). Detected charging current (Id) is compared with the maximum allowable current (Imax) for the battery being measured, and battery charger output current is gradually increased without causing detected charging current (Id) to exceed the maximum allowable current (Imax) in any of the batteries. Battery charger output current is gradually increased to make charging current in the battery with charging current closest to Imax, which is the battery with the smallest current difference (IΔ), equal to the maximum charging current (Ic) (output control step).

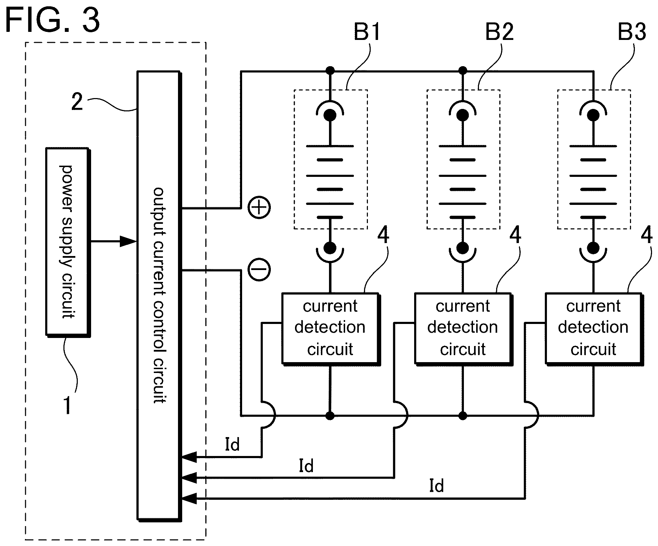

A block diagram of a battery charger for charging parallel connected batteries by the method described above is shown in FIG. 3. The battery charger in this figure is provided with a power supply circuit 1, an output current control circuit 2 that controls the output current of the power supply circuit 1, and current detection circuits 4 that detect the charging current in each of the batteries B1, B2, and B3 and input that detected charging current to the output current control circuit 2. The output current control circuit 2 is a microprocessor (not shown) and a semiconductor device (not shown) that controls battery charger output current according to signals output from the microprocessor. When the batteries B1, B2, and B3 are connected to the battery charger and charging is required, charging current corresponding to the smallest maximum allowable current (Imax) of the batteries B1, B2, and B3 is acquired. The battery charger sets output current equal to or less than the smallest of the maximum allowable currents (Imax) for the batteries B1, B2, and B3 and begins charging. Based on the detected charging current (Id) input from each current detection circuit 4 and the maximum allowable current (Imax), which is previously input or detected for each battery, battery charger output current is controlled to make charging current equal to the maximum charging current (Ic) and simultaneously charge all the batteries B1, B2, and B3. When charging is initiated, battery charger output current is set equal to or less than the smallest maximum allowable current (Imax) to avoid exceeding the maximum allowable current of any the batteries B1, B2, and B3. Setting battery charger output current to the smallest maximum allowable current is preferable from the standpoint of reducing charging time.

In the charging method for charging the parallel connected batteries B1, B2, and B3 with the battery charger in FIG. 3, the output current control circuit 2 repeats the current detection step and the output control step with given periodicity and increases the current in the battery with charging current closest to the maximum allowable current (Imax) (B2 in FIG. 1 and FIG. 2) to the maximum charging current (Ic) for simultaneous charging of all the batteries B1, B2, and B3. The time for looping between the current detection step and the output control step to make output current approach the maximum charging current (Ic) is set, for example, greater than or equal to 0.2 seconds and less than or equal to 5 minutes, preferably greater than or equal to 10 seconds and less than or equal to 3 minutes, and more preferably greater than or equal to 30 seconds and less than or equal to 3 minutes. If the looping period is too long, too much time is required to control battery B1, B2, and B3 charging current to the maximum charging current (Ic), and if the period is too short, stable current detection for controlling charging current becomes difficult. Accordingly, considering the capability to accurately detect and control charging current in the batteries B1, B2, and B3 while rapidly controlling charging current to the maximum charging current (Ic), the looping period is set within the above range.

### (Initial Charging Step)

The initial charging step commences charging each battery with output current from the battery charger. In the initial charging step, battery charger output current is set to make charging current in each battery equal to the minimum charging current (Imin). The minimum charging current (Imin) is the current used to commence charging the parallel connected batteries B1, B2, and B3, and initial charging current in all the batteries B1, B2, and B3 is less than or equal to the maximum allowable current (Imax). Specifically, the minimum charging current (Imin) is set less than or equal to the maximum allowable current (Imax) of the battery with the lowest maximum allowable current (Imax).

In the initial charging step, the maximum allowable current (Imax) for each of the batteries B1, B2, and B3 is detected, battery charger output current is set to less than or equal to the lowest maximum allowable current (Imax) in those batteries B1, B2, and B3, and charging current in each battery is initiated with that minimum charging current (Imin). Accordingly, the parallel connected batteries B1, B2, and B3 are charged with charging current set less than or equal to the maximum allowable current (Imax) in each battery.

Charging current corresponding to the smallest maximum allowable current for the batteries B1, B2, and B3 connected in parallel with the battery charger is sought. In the initial charging step, charging is commenced with a battery charger output current that makes the minimum charging current (Imin) flow through each battery. The minimum charging current (Imin) is set less than or equal to the maximum allowable current (Imax) of the battery with the lowest maximum allowable current (Imax). In addition, battery charger output current for initial charging is set less than or equal to the lowest maximum allowable current (Imax) of the plurality of batteries. By setting battery charger output current for initial charging less than or equal to the lowest maximum allowable current (Imax) of the plurality of batteries, the minimum charging current (Imin) that initially flows through each battery does not exceed the lowest maximum allowable current (Imax) and charging of the respective batteries can be safely started. Since battery charger output current is normally current divided to flow as charging current in each of the batteries, charging current in each battery is less than the maximum allowable current (Imax). Even if there was no current division of the battery charger output current and, for example, that output current were to flow entirely into the battery with the lowest maximum allowable current, charging current in that battery would be equal to the minimum charging current (Imin), which does not exceed the lowest maximum allowable current (Imax), and safe charging would be ensured.

Battery charger output current at the start of charging is preferably set to the smallest maximum allowable current (Imax) in the plurality of batteries. This ensures that the minimum charging current (Imin) flowing through each battery does not exceed the maximum allowable current (Imax) of any battery and allows charging to be safely started. In addition, by setting the minimum charging current (Imin) as high as possible without exceeding the maximum allowable current (Imax) and starting charging with a current close to the maximum allowable current (Imax), charging current in the battery with charging current closest to Imax can be rapidly increased to the maximum charging current (Ic) for quick and efficient charging of each battery to reduce total charging time.

The charging method described above increases battery charger output current to charge the batteries B1, B2, and B3 by increasing the detected charging current (Id) from the minimum charging current (Imin) up to the maximum charging current (Ic). In subsequent steps after the initial charging step, the charging method proceeds by looping between the current detection step and the output control step with given periodicity to control the increase in output current, raise charging current to the maximum charging current (Ic), and charge the parallel connected batteries.

### (Current Detection Step)

This step detects the charging current for each battery in which charging has begun. Charging current in each battery can be detected independently by separate current detection circuits 4. However, although not illustrated, a single current detection circuit can be time division multiplexed to sequentially detect charging current in each of the plurality of batteries. Battery current detection can be implemented, for example, by detecting voltage across a current detection resistor connected in series with the battery. However, current detection can be implemented with any current detection circuitry or current sensor. For example, current detection can be implemented by a sensor that detects magnetic flux at a battery lead.

### (Output Control Step)

This step detects the current difference (IΔ) between the detected charging current (Id) in each battery acquired in the current detection step and the maximum allowable current (Imax) for the battery being measured. Battery charger output current is controlled based on the current difference (IΔ) to make the charging current in the battery with charging current closest to Imax become equal to the maximum charging current (Ic). Since battery charger output current is set low during the initial stage of charging, current difference (IΔ) between the detected charging current (Id) and the maximum allowable current (Imax) is sufficiently large in each battery. Accordingly, at the beginning of charging, even if battery charger output current is increased in the output control step, the probability that any charging current will exceed the maximum allowable current (Imax) is low. However, as battery charger output current is gradually increased and detected charging current (Id) increases in each battery, charging current in the battery with charging current closest to Imax approaches the maximum charging current (Ic) and the current difference (IΔ) decreases. If battery charger output current is increased above a given level, detected charging current (Id) in the battery with charging current closest to Imax can exceed the maximum charging current (Ic). If detected charging current (Id) in the battery with charging current closest to Imax exceeds the maximum charging current (Ic), battery charger output current is reduced to make detected charging current (Id) lower than the maximum allowable current (Imax).

Battery charger output current is increased and decreased In the output control step to make detected charging current (Id) in the battery with charging current closest to Imax become equal to the maximum charging current (Ic) and thereby charge all the batteries. Battery charger output current is increased or decreased based on the current difference (IΔ) between the detected charging current (Id) and the maximum allowable current (Imax) of the battery with charging current closest to Imax. Battery charger output current can be increased when detected charging current (Id) of the battery with charging current closest to Imax is less than the maximum allowable current (Imax). However, it is preferable to increase output current only when detected charging current (Id) of the battery with charging current closest to Imax is less than the maximum charging current (Ic) and the current difference (IΔ) is greater than or equal to a preset threshold value.

Setting battery charger output current to the present output current plus the current difference (IΔ) between detected charging current (Id) and maximum allowable current (Imax) of the battery with charging current closest to Imax is also a suitable procedure. By repeatedly setting the output current to the present output current plus the current difference (IΔ), detected charging current (Id) can be controlled to not exceed the maximum allowable current (Imax) by maintaining the current difference (IΔ) in a threshold range.

A method that increases battery charger output current while confirming that the current difference (IΔ) exceeds a threshold value can lower the probability that charging current of the battery with charging current closest to the maximum allowable current (Imax) will exceed Imax by setting the threshold value high. In particular, when output current is increased, setting the threshold larger than the increase in charging current of the battery with charging current closest to Imax can be reduce the probability that detected charging current (Id) in that battery will exceed the maximum allowable current (Imax). For example, by setting the threshold equal to or greater than the current increment (I+), which is added to battery charger output current to increase current in a stepwise manner, the probability that detected charging current (Id) of the battery with charging current closest to Imax will exceed the maximum charging current (Ic) can be reduced. When the threshold is set greater than the current increment (I+), detected charging current (Id) of the battery with charging current closest to Imax does not exceed the maximum charging current (Ic) because battery charger output current is current divided into the plurality of batteries.

For example, a battery charger that charges three batteries connected in parallel supplies output current that is current divided into the three batteries. Assuming that charging current in each battery is approximately equal, detected charging current (Id) in each battery would be approximately 1/3 of the output current. Specifically, since the current increment (I+) added to the charging current in each battery is current divided, even if the current increment (I+) is set equal to the threshold, the increase in charging current in the battery with charging current closest to Imax would be about 1/3 of the current increment (I+) and charging current would not exceed the maximum allowable current (Imax). However, battery charger output current is not necessarily equally divided into each battery, and even when the current increment (I+) is set equal to the threshold, the increase in charging current in the battery with charging current closest to Imax is not necessarily 1/3 of the current increment (I+). Assuming that all the battery charger output current flows into the battery with charging current closest to Imax, the increase in charging current in that battery would be equal to the increase in battery charger output current, and that increase in charging current would be equal to the current increment (I+), which is set equal to the threshold. In practice, when a plurality of batteries are charged by parallel connection to a battery charger, the probability that all the battery charger output current will flow only into a given battery is extremely low. Normally, the amount of charging current increase in each battery is less than or equal to the increase in battery charger output current.

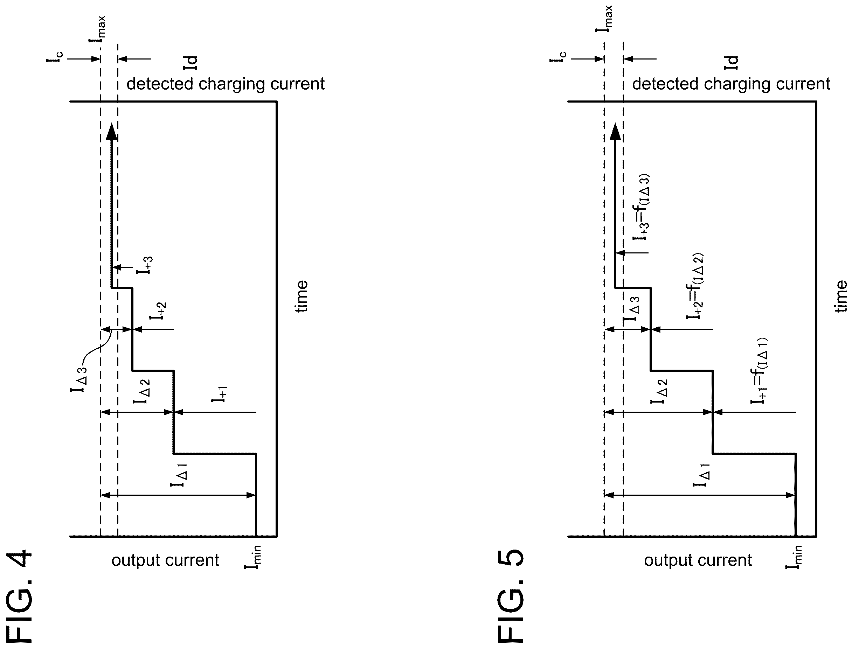

FIGS. 4-6 show battery charger output current and detected charging current (Id) of the battery with charging current closest to Imax. Since detected charging current (Id) increases approximately in proportion to output current, output current and detected charging current (Id) vary with similar characteristics. Accordingly, in FIGS. 4-6, the left side Y-axis indicates battery charger output current, and the right side Y-axis indicates detected charging current (Id) in the battery with charging current closest to Imax.

The battery charger can increase output current in a stepwise manner by adding a current increment (I+) to the output current when charging current is detected. As shown in FIG. 4, the current increment (I+) can be set large during initial charging and gradually decreased over time to increase charging current (I+1, 2, 3) in a stepwise manner. In the initial stage of charging when battery charging current is significantly lower than the maximum allowable current (Imax), this method adds a large current increment (I+) to rapidly increase current in the battery with charging current closest to Imax up to the maximum charging current (Ic). In the initial stage of charging, detected charging current (Id) is small and the current difference (IΔ1) from the maximum allowable current (Imax) is large. This method can rapidly increase charging current towards the maximum allowable current (Imax) and reduce charging time by increasing the current increment (I+1) when the probability that detected charging current (Id) will exceed the maximum allowable current (Imax) is low, namely when detected charging current (Id) is sufficiently lower than the maximum allowable current (Imax) at the beginning of charging. As charging proceeds, detected charging current (Id) in the battery with charging current closest to Imax gradually increases and the current difference from the maximum allowable current (Imax) (IΔ2, 3) decreases. Therefore, as charging progresses, the current increment (I+2, 3) is reduced, charging current increase in the battery with charging current closest to Imax is reduced, and detected charging current (Id) is controlled to not exceed the maximum allowable current (Imax). Consequently, charging current can be accurately controlled to approach the maximum allowable current (Imax) and more safely charge all the batteries.

Setting the current increment (I+) added to battery charger output current equal to the current difference (IΔ) between detected charging current (Id) and maximum allowable current (Imax) for the battery with charging current closest to Imax is also a suitable strategy. In this case, the current increment (I+) can be set in an appropriate range to ensure that detected charging current (Id) does not exceed the maximum allowable current (Imax).

As shown in FIG. 5, the battery charger can determine the current increment (I+) according to the current difference (IΔ) between detected charging current (Id) and the maximum allowable current (Imax) for the battery with charging current closest to Imax. For example, the current increment (I+) can be a function of the current difference (IΔ), or can be a function that includes the current difference (IΔ) as a variable. The function can increase the current increment (I+) proportionally with the current difference (IΔ). This method can determine the current increment (I+1, 2, 3) as a function (f) of the most recent current difference (IΔ1, 2, 3) for the battery with charging current closest to Imax. Specifically, the current increment (I+) is set according to the current difference (IΔ) of the battery with charging current closest to Imax. When the current difference (e.g., IΔ1) is large, the current increment (I+1) is made large, and when the current difference (e.g., IΔ2, IΔ3) become smaller, the current increment (I+2, 3) is made smaller. This method has the characteristic that battery charger output current can be rapidly increased and charging current in the battery with charging current closest to Imax can be quickly raised to the maximum charging current (Ic) for efficient charging in a shorter time.

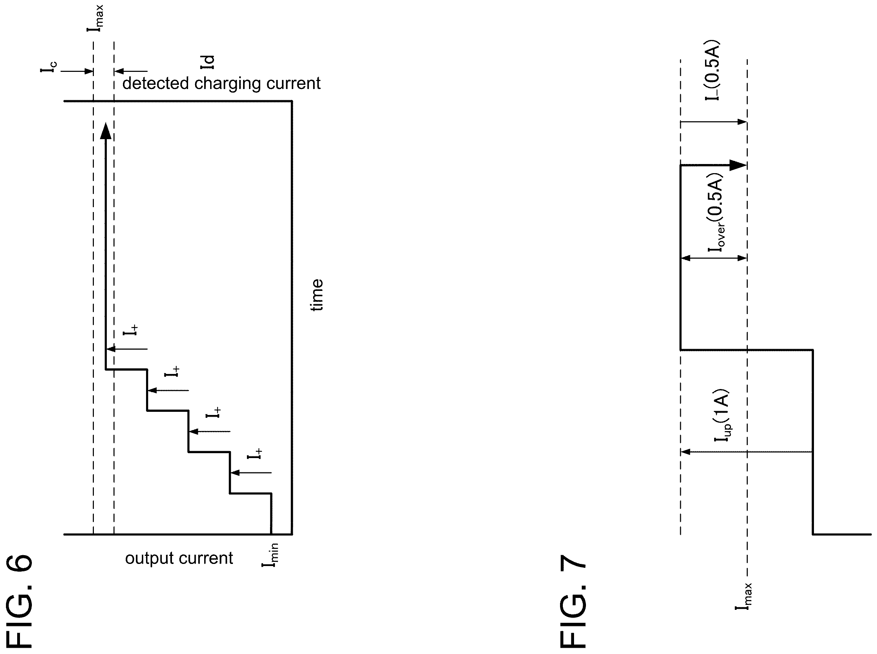

Further, as shown in FIG. 6, battery charger output current can be increased in a stepwise manner by adding a current increment (I+) that is a preset constant current value. In this method, charging current of the battery with charging current closest to Imax is detected at predetermined intervals, and when the decision to increase output current is made based on detected charging current (Id), the preset constant current increment (I+) is added to battery charger output current increasing it in equal steps. Since this stepwise increasing charging current can charge the battery with charging current closest to Imax up to the maximum charging current (Ic) without having to compute current increments (I+), control is simplified. Although not illustrated, battery charger output current can also be increased stepwise with a current increment (I+) that decreases in a constant ratio, rate of change, or amount of change.

A method that adds a current increment (I+) to increase battery charger output current in steps can cause the detected charging current (Id) of the battery with charging current closest to Imax, or of any battery, to exceed the maximum allowable current (Imax). When detected charging current (Id) exceeding the maximum allowable current (Imax) is detected, battery charger output current is reduced to make detected charging current (Id) in the battery exceeding the maximum allowable current (Imax) less than or equal to the maximum allowable current (Imax).

For example, control can loop from the output control step back to the initial charging step to reduce battery charger output current to the minimum charging current (Imin). Battery charger output current can subsequently be increased in steps to control detected charging current (Id) up to the maximum charging current (Ic). This method can rapidly reduce the detected charging current (Id) in a battery exceeding the maximum charging current (Ic) or the maximum allowable current (Imax) to the minimum charging current (Imin).

Alternatively, battery charger output current can be reduced without looping from the output control step back to the initial charging step by subtracting a current decrement (I-) from the output current. For example, as shown in FIG. 7, the current decrement (I-) can be calculated from the increase in detected charging current (Id) caused by addition of the current increment (I+) to battery charger output current (current increase Iup) and the amount by which detected charging current (Id) exceeds the maximum allowable current (Imax) as a result of current increment (I+) addition (over-current Iover). FIG. 7 illustrates detected charging current (Id) increase due to addition of the current increment (I+) to the output current and charging current decrease due to subtraction of the current decrement (I-) from the output current. In this method, the current decrement (I-) necessary to reduce the over-current (Iover) can be calculated from the ratio of current increase (Iup) and over-current (Iover). For example, if the current increment (I+) added to the output current increases detected charging current (Id) by (Iup) equal to 1A and the over-current (Iover) is equal to 0.5A, subtracting half the current increment (I+) can reduce the over-current (Iover) by 0.5A. Therefore, the current decrement (I-) is made equal to 0.5A.

As noted, increasing the present battery charger output current by adding the current difference (IΔ) between detected charging current (Id) and the maximum allowable current (Imax) for the battery with charging current closest to Imax is a valid technique. By repeatedly setting battery charger output current to this value and maintaining current difference (IΔ) within a threshold range, detected charging current (Id) can be controlled not to exceed the maximum allowable current (Imax), and over-current (Iover) can be avoided.

### (Constant Current Charging and Constant Voltage Charging)

In the method described above, each battery is charged by constant current that is set to not exceed the maximum allowable current (Imax). However, batteries such as lithium-ion rechargeable batteries are fully charged by constant voltage charging performed after constant current charging. Here, each battery can be charged with constant current according to the previously described method, and when battery voltage rises to a preset maximum voltage, for example, 4.2 V for lithium-ion rechargeable batteries, the charging mode can be switched to constant voltage charging to attain full charge. While this type of battery cannot be fully charged by constant current charging alone, constant current charging can efficiently charge batteries up to a significant remaining capacity. Consequently, batteries can also be used by charging only with constant current charging.

### (Embodiment 2)

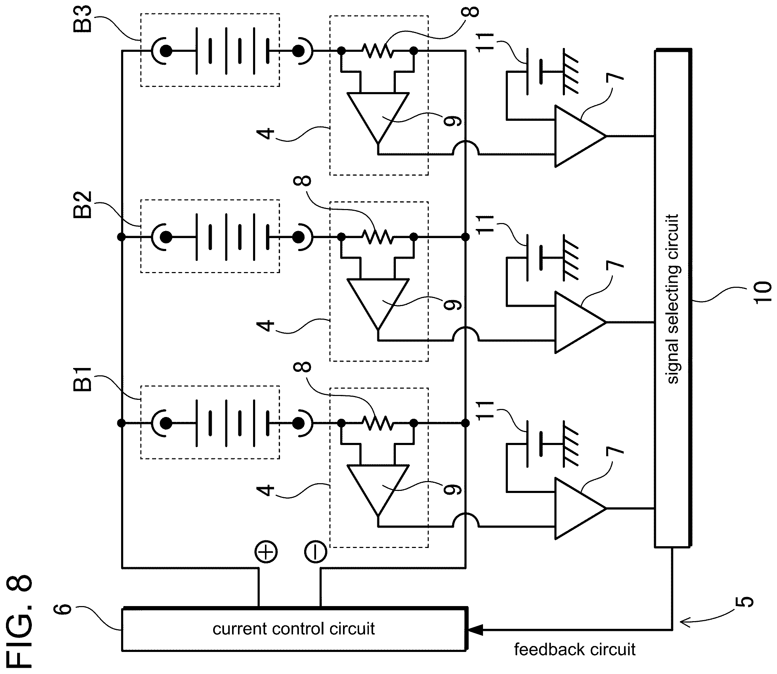

FIG. 8 shows a block diagram of a battery charger that controls output current in real-time to make charging current in the battery with charging current closest to Imax approach the maximum charging current (Ic). This battery charger detects charging current in each of the batteries B1, B2, and B3 with current detection circuits 4, and feeds the detected signal back to the input side of the current control circuit 6 through a feedback circuit 5. The current control circuit 6 is provided with a semiconductor device such as a field effect transistor (FET) or bipolar transistor that controls output current. The battery charger in this block diagram can continuously vary output current as shown in FIG. 2 to control charging current in the battery with charging current closest to Imax to increase to the maximum charging current (Ic).

The battery charger in FIG. 8 is provided with current detection circuits 4 that detect the charging current in each battery; comparators 7 that compare the detected charging current (Id) in each battery B1, B2, and B3 with a reference voltage 11 that corresponds to the maximum allowable current (Imax) for each battery, and each comparator outputs a current difference signal that indicates the current difference between the detected charging current (Id) and the maximum allowable current (Imax); a signal selecting circuit 10 that selects and outputs the smallest current difference signal output from the comparators 7; and a feedback circuit 5 that controls the output current based on the smallest difference signal selected by the signal selecting circuit 10.

Each current detection circuit 4 is provided with a current detection resistor 8 connected in series with each battery B1, B2, and B3, and a difference amplifier 9 that detects voltage across the current detection resistor 8. The difference amplifiers 9 output voltage proportional to the current in each battery B1, B2, and B3. Each difference amplifier 9 amplifies the voltage across the current detection resistor 8 to convert battery current into a voltage signal for output. A current detection circuit 4 that amplifies voltage across the current detection resistor 8 can output a relatively large voltage while limiting the electrical resistance of the current detection resistor 8. Each current detection circuit 4 outputs an analog voltage signal proportional to the current in each battery B1, B2, and B3.

The comparator 7 is also a difference amplifier. The analog signal output from the current detection circuit 4 corresponding to battery current is input to one terminal of the comparator, and a reference voltage 11 that represents the maximum allowable current (Imax) is input to the other terminal. The comparator outputs a current difference signal that is a voltage proportional to the difference between the analog signal for battery current and the reference voltage. The reference voltage 11 is set equal to the voltage output from the current detection circuit 4 when battery current is at the maximum allowable current (Imax). Comparator 7 output is 0 V when battery charging current equals the maximum allowable current (Imax). Comparator output, which is a current difference signal, increases positively or negatively as battery charging current deviates from the maximum allowable current (Imax). The comparator current difference signal is proportional to the voltage difference between the current detection circuit 4 output signal and the reference voltage 11, namely, comparator output indicates the current difference (IΔ) between detected charging current (Id) and the maximum allowable current (Imax). The polarity of the comparator output indicates whether the detected charging current (Id) is above or below the maximum allowable current (Imax). Consequently, the magnitude of the current difference (IΔ) between detected charging current (Id) and the maximum allowable current (Imax) can be determined from the current difference signal output from the comparator, and whether or not detected charging current (Id) exceeds the maximum allowable current (Imax) can also be determined from the polarity of the current difference signal.

The signal selecting circuit 10 selects the current difference signal with minimum voltage from the current difference signals input from the comparators 7 and feeds it back to the current control circuit 6 through the feedback circuit 5. Since the current difference signals output from the comparators 7 specify the current difference (IΔ) between detected charging current (Id) and the maximum allowable current (Imax) for each battery B1, B2, and B3, the selected minimum current difference signal corresponds to the current difference (IΔ) between detected charging current (Id) and the maximum allowable current (Imax) for the battery with charging current closest to Imax.

The feedback circuit 5 feeds the minimum current difference signal, which is the current difference (IΔ) of the battery with charging current closest to Imax, input from the signal selecting circuit 10 back to the current control circuit 6 to control output current. Specifically, the current control circuit 6 controls battery charger output current, to make charging current in the battery with charging current closest to Imax become equal to the maximum charging current (Ic).

Since the battery charger shown in FIG. 8 controls output current to make detected charging current (Id) become equal to the maximum charging current (Ic), it has the characteristic that output current is continuously controlled to make charging current in the battery with charging current closest to Imax equal to the maximum charging current (Ic), and this rapidly and efficiently charges the batteries.

### INDUSTRIAL APPLICABILITY

The method for charging parallel connected batteries and parallel connected battery charger of the present invention can be effectively used as a method and as a battery charger for simultaneously charging a plurality of parallel connected batteries.

### REFERENCE SIGNS LIST

- 1: power supply circuit

- 2: output current control circuit
- 4: current detection circuit
- 5: feedback circuit
- 6: current control circuit
- 7: comparator
- 8: current detection resistor
- 9: difference amplifier
- 10: signal selecting circuit
- 11: reference voltage
- B1, B2, B3: battery

## Claims

1. A method for charging a plurality of batteries connected in parallel by controlling battery charger output current, the method comprising:
charging the plurality of batteries with a battery charger making a battery charging current equal to a minimum charging current (Imin);
detecting the charging current in each battery;
comparing the detected charging current (Id) with a maximum allowable current (Imax) of the battery being measured; and
gradually increasing the battery charger output current until the charging current in the battery with the smallest current difference (IΔ) between detected charging current (Id) and the maximum allowable current (Imax), namely the battery with charging current closest to Imax, reaches a maximum charging current (Ic), which can include the maximum allowable current (Imax), thereby simultaneously charging the plurality of batteries, without detected charging current (Id) exceeding the maximum allowable current (Imax) in any battery.

2. The method for charging parallel connected batteries as recited in claim 1, wherein
battery charger output current is set less than or equal to the lowest of all the maximum allowable currents (Imax) of the plurality of batteries, and
charging is initiated with battery charging current set to that minimum charging current (Imin).

3. The method for charging parallel connected batteries as recited in claim 1 or 2, further comprising:
an initial charging step that initiates charging with battery charger output current set to make the charging current in each battery equal to the minimum charging current (Imin);
a current detection step following the initial charging step that detects charging current in each battery; and
an output control step that determines the current difference (IΔ) between the detected charging current (Id) measured in the current detection step and the maximum allowable current (Imax), and increases or decreases output current to control battery charger output current based on the current difference (IΔ),
wherein the current detection step and the output control step are repeated with a given periodicity, and
battery charger output current is increased until the charging current of the battery with charging current closest to Imax reaches the maximum charging current (Ic) thereby charging the plurality of parallel connected batteries.

4. The method for charging parallel connected batteries as recited in claim 3,
wherein a current increment (I+) is added to the battery charger output current in the output control step to increase battery charger output current in a stepwise manner.

5. The method for charging parallel connected batteries as recited in claim 4, wherein the current increment (I+) added to the battery charger output current
is determined from the current difference (IΔ) between the detected charging current (Id) and the maximum allowable current (Imax) for the battery with charging current closest to Imax.

6. The method for charging parallel connected batteries as recited in claim 4, wherein the current increment (I+) added to the battery charger output current gradually decreases from the initial charging step.

7. The method for charging parallel connected batteries as recited in claim 4, wherein the current increment (I+) added to the battery charger output current
is preset.

8. The method for charging parallel connected batteries as recited in claim 3, wherein when detected charging current (Id) exceeds the maximum allowable current (Imax), battery charger output current is reduced by looping from the output control step back to the initial charging step.

9. The method for charging parallel connected batteries as recited in claim 3, wherein a current decrement (I-) is subtracted from battery charger output current in the output control step to reduce the output current.

10. The method for charging parallel connected batteries as recited in claim 9, wherein the current decrement (I-) is determined based on the over-current (Iover), which is the amount that detected charging current (Id) exceeds the maximum allowable current (Imax).

11. The method for charging parallel connected batteries as recited in claim 3, wherein the detected charging current (Id) of each battery is compared with the maximum allowable current (Imax) for the battery being measured, and
when the detected charging current (Id) of the battery with charging current closest to Imax is less than the maximum allowable current (Imax), and
further when that current difference (IΔ) between detected charging current (Id) and the maximum allowable current (Imax) is greater than or equal to a preset threshold value,
battery charger output current is increased in the output control step to charge the plurality of parallel connected batteries.

12. The method for charging parallel connected batteries as recited in claim 3, wherein
the detected charging current (Id) of each battery is compared with the maximum allowable current (Imax) for the battery being measured, and
when the detected charging current (Id) of any battery exceeds the maximum allowable current (Imax),
battery charger output current is decreased in the output control step to charge the plurality of parallel connected batteries.

13. The method for charging parallel connected batteries as recited in claim 3, wherein when the detected charging current (Id) of the battery with charging current closest to Imax is equal to the maximum charging current (Ic),
battery charger output current is not increased or decreased in the output control step to charge the plurality of parallel connected batteries.

14. The method for charging parallel connected batteries as recited in claim 1, wherein the plurality of batteries connected in parallel have different charge capacities (Ah).

15. A battery charger for charging parallel connected batteries comprising:
current detection circuits that detect the charging current of each battery connected to the battery charger;
comparators that compare the detected charging current (Id) detected by the current detection circuit for each battery with a reference current corresponding to the maximum allowable current (Imax) for that battery, and the comparator for each battery outputs a current difference signal for that battery;
a signal selecting circuit that selects the smallest current difference signal from the current difference signals output by the respective comparators;
a feedback circuit that controls battery charger output current based on the smallest current difference signal selected by the signal selecting circuit; and
an output current control circuit that controls battery charger output current based on the control signal input from the feedback circuit,
wherein the output current control circuit is controlled by the smallest current difference signal input from the feedback circuit to control battery charger output current to make charging current in the battery with charging current closest to Imax rise to the maximum charging current (Ic), thereby charge the parallel connected batteries.
